# EUROPÄISCHE PATENTSCHRIFT

(11) **EP 1 407 846 B1**
(45) Veröffentlichungstag und Bekanntmachung des Hinweises auf die Patenterteilung: **04.11.2009**
(21) Anmeldenummer: 03021888.7
(22) Anmeldetag: 27.09.2003
(51) Int. Cl.: B23B 31/26, F16F 15/36, B23Q 11/00, G01M 1/36

(54) **Werkzeugspanner**
Tool clamping device
Dispositif pour le serrage d'un outil

(30) Priorität: 12.10.2002 DE 20215709 U
(43) Veröffentlichungstag der Anmeldung: 14.04.2004
(73) Patentinhaber: OTT-JAKOB GmbH & Co. Spanntechnik KG, 87663 Lengenwang (DE)
(72) Erfinder: Jakob Ludwig, D-63839 Kleinwallstadt (DE); Reisacher Bartholomäus, D-87496 Untrasried (DE); Greif Josef, D-87654 Friesenried (DE)
(74) Vertreter: Schwarz, Thomas

(56) Entgegenhaltungen:
- EP-A- 0 044 825
- US-A1- 2002 056 338
- PATENT ABSTRACTS OF JAPAN vol. 018, no. 422 (M-1651), 8. August 1994 (1994-08-08) -& JP 06 126589 A (HITACHI SEIKO LTD), 10. Mai 1994 (1994-05-10)
- PATENT ABSTRACTS OF JAPAN vol. 018, no. 422 (M-1651), 8. August 1994 (1994-08-08) & JP 06 126588 A (HITACHI SEIKO LTD), 10. Mai 1994 (1994-05-10)

## Beschreibung

Die Erfindung betrifft einen Werkzeugspanner zum Spannen eines Werkzeugs oder Werkzeughalters in einer Arbeitsspindel einer Werkzeugmaschine nach dem Oberbegriff des Anspruchs 1.

Ein derartiger Werkzeugspanner ist aus der JP 06 126589 A bekannt. Bei dem dort offenbarten Werkzeugspanner erfolgt ein Unwuchtsausgleich durch einen auf der Zugstange angeordneten Ausgleichsring und Ausgleichsgewichte, die in Gewindebohrungen an der Spitze einer Arbeitspindel und in Gewindebohrungen einer am Ende der Arbeitsspindel angeordneten Mutter einschraubbar sind. Eine vorgenommene Einstellung des Unwuchtsausgleichs bleibt hier jedoch auch bei sich verändernden Unwuchten erhalten.

Aufgabe der Erfindung ist es, einen Werkzeugspanner mit einem Unwuchtausgleich der eingangs genannten Art zu schaffen, bei dem auch ohne zusätzlichen Platzbedarf eine Ausgleich veränderlicher Unwuchten möglich ist.

Diese Aufgabe wird durch einen Werkzeugspanner mit den Merkmalen des Anspruchs 1 gelöst. Zweckmäßige Ausgestaltungen und vorteilhafte Weiterbildungen der Erfindung sind in den Unteransprüchen angegeben.

Bei dem erfindungsgemäßen Werkzeugspanner können Veränderungen von Art, Lage und Betrag einer Unwucht auch während des Betriebs ohne Eingriff von außen direkt ausgeglichen werden. Die in der Spannerelementen integrierten Ausgleichsmassen nehmen automatisch eine von der jeweiligen Unwucht abhängige Position zum Ausgleich der Unwucht ein. Durch die integrierte Ausführung ist eine besonders kompakte Bauweise ohne zusätzlichen Platzbedarf möglich. Außerdem kann auch ein aufwendiges Auswuchten mit speziellen Auswuchtmaschinen entfallen. Die Einrichtung zum automatischen Unwuchtausgleich besteht aus einer in dem Spannerelement zu dessen Mittelachse koaxial angeordneten Umlaufbahn mit mehreren darin frei beweglichen Ausgleichsmassen. Es handelt es sich hierbei in vorteilhafter Weise um Kugeln, die sich mit geringer Reibung frei innerhalb der Laufbahn bewegen können.

Zweckmäßigerweise ist in mehreren Spanncrelementen eines Werkzeugspanners eine Einrichtung zum automatischen Unwuchtausgleich integriert. Diese kann z.B. in einem Spannsatz, einer Anlage- oder Stützscheibe und/oder einer Zugstange eines HSK-Werkzeugspanners eingebaut sein. Dadurch können auch größere Unwuchten an unterschiedlichen Stellen ausgeglichen werden. Der automatische Unwuchtausgleich kann in entsprechender Weise aber auch bei einem SK-Werkzeugspanner oder einem anderen Spannsystem zum Einsatz gelangen. So kann z-B. die Einrichtung zum Unwuchtausgleich auch in den Zangenhalter, die Anlage- oder Stützscheiben, die Getriebeteile und/oder den Kolben eines SK-Werkzeugspanners integriert sein.

In einer weiteren zweckmäßigen Ausführung ist in der Umlaufbahn neben den Ausgleichskörpem auch eine Flüssigkeit angeordnet. Dadurch kann die Reaktionsgeschwindigkeit des Systems verändert bzw. angepaßt werden. In vorteilhafter Weise kann außerdem vorgesehen werden, daß die Viskosität der Flüssigkeit von außen veränderbar ist. Dies kann z.B. durch Veränderung der Temperatur einer viskosen Flüssigkeit erfolgen. Die Eigenschaft der Flüssigkeit innerhalb der Umlaufbahn und damit auch das Verhalten der Ausgleichskörper kann auch durch Anlegen eines Magnetfeldes verändert werden, sofern die Flüssigkeit magnetisierbare Partikel enthält. Dadurch kann der Unwuchtausgleich an die unterschiedlichen Anforderungen angepaßt werden.

Weitere Besonderheiten und Vorzüge der Erfindung ergeben sich aus der folgenden Beschreibung eines bevorzugten Ausführungsbeispiels anhand der Zeichnung. Es zeigen:
- **Figur 1**: den vorderen Teil eines Werkzeugspanners in einer Arbeitsspindel einer Werkzeugmaschine im Längschnitt;
- **Figur 2**: eine vergrößerte Teilansicht des in Figur 1 gezeigten Werkzeugspanners im Längsschnitt;
- **Figur 3**: ein Spannerelement des in Figur 1 und 2 gezeigten Werkzeugspanners mit integrierter Einrichtung zum automatischen Unwuchtausgleich in einem Längs- und Querschnitt und
- **Figur 4**: eine schematische Darstellung zur Erläuterung der Funktionsweise des automatischen Unwuchtausgleichs.

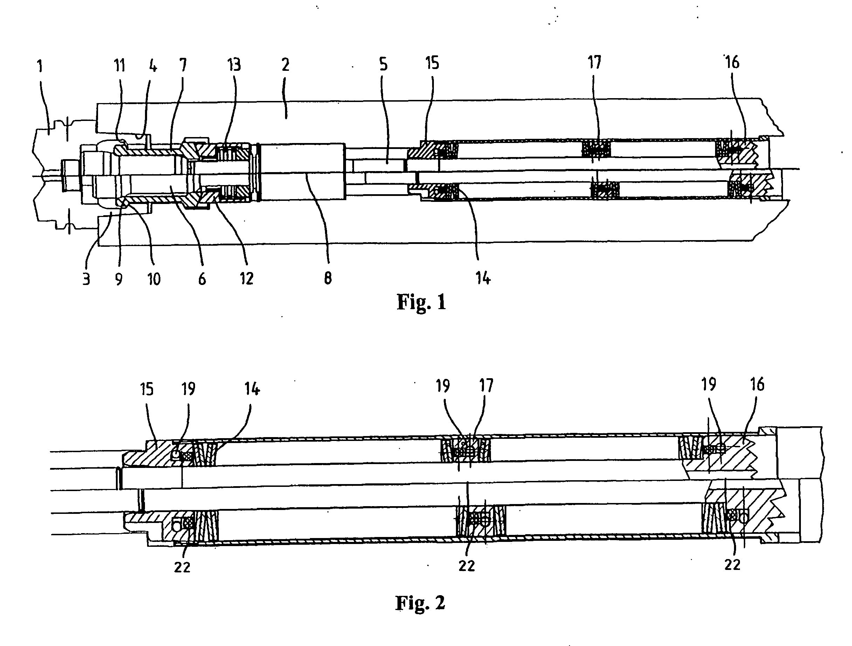

In Figur 1 ist der vordere Teil einer Vorrichtung zum Spannen eines Hohlschaftwerkzeugs 1 in einer drehangetriebenen Arbeitsspindel 2 einer Werkzeugmaschine dargestellt. In der oberen Hälfte der Figur 1 ist die Spannvorrichtung in einer Lösestellung und in der unteren Hälfte in einer Spannstellung gezeigt. Das Hohlschaftwerkzeug 1 enthält einen Kegel-Hohlschaft 3 zum Eingriff in einen entsprechenden Innenkegel 4 am vorderen Ende der hohlzylindrischen Arbeitsspindel 2.

Innerhalb der Arbeitsspindel 2 ist eine axial bewegliche Spannstange 5 angeordnet, die an ihrem werkzeugseitigen vorderen Ende eine zur Arbeitsspindel 2 koaxiale Spannhülse 6 trägt. An der Außenseite der Spannhülse 6 sind mehrere in Umfangsrichtung gleichbeabstandete Spannklauen 7 angeordnet, die sich parallel zur Mittelachse 8 der Arbeitsspindel erstrecken. Die Spannklauen 7 sind durch eine Axialbewegung der Spannhülse 6 mittels der Spannstange 5 zwischen der in Figur 1 oben gezeigten Lösestellung und der unten dargestellten Spannstellung bewegbar. Die Spannklauen 7 weisen an ihrem dem Kegel-Hohlschaft 3 zugewandten vorderen Ende eine radiale Verdickung 9 mit einer konischen Spannfläche 10 auf. Diese liegt bei der in der unteren Hälfte der in Figur 1 gezeigten Spannstellung an einer entgegengesetzt konischen Innenfläche des Kegel-Hohlschafts 3 an. An ihren hinteren Enden liegen die Spannklauen 7 an einem Druckring 12 an, der durch eine Druckfeder 13 in Richtung der Spannklauen 7 beaufschlagt wird.

Um die Spannstange 5 ist ein Druckfedersystem in Form eines Tellerfederpakets 14 angeordnet, das sich auf der einen Seite an einer innerhalb der Arbeitsspindel 2 abgestützen Anlagescheibe 15 und auf der anderen Seite an einem Ringabsatz 16 der Spannstange 5 abstützt. Das Tellerfederpaket 14 besteht aus einer vorderen und hinteren Tellerfederanordnung, die durch eine dazwischen angeordnete Stützscheibe 17 voneinander getrennt sind. Durch das Tellerfederpaket 14 wird die Spannstange 5 und die an ihrem vorderen Ende befestigte Spannhülse 6 in die in der unteren Hälfte der Figur 1 gezeigte zurückgezogene Spannstellung gedrückt. Zum Lösen des Werkzeugspanners wird die Spannstange 5 durch eine nicht dargestellte Betätigungseinrichtung entgegen der Kraft des Tellerfederpakets 14 nach vorne gedrückt, bis die an der Außenseite der Spannhülse 6 anliegenden Spannklauen 7 in die in der oberen Hälfte von Figur 1 dargestellte Lösestellung gelangen. In dieser Stellung wird das Hohlschaftwerkzeug 1 zur Entnahme aus der Arbeitsspindel 2 freigegeben.

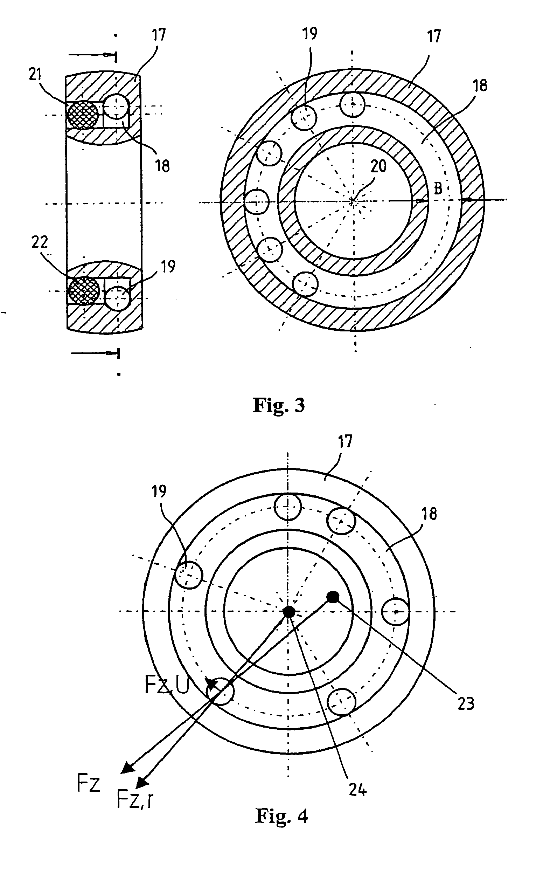

Wie besonders aus Figur 2 hervorgeht, ist in der Anlagescheibe 15, der Stützscheibe 17 und in dem Ringabsatz 16 der Spannstange 5 jeweils eine Einrichtung zum automatischen Unwuchtausgleich integriert, deren Aufbau im folgenden am Beispiel der in Figur 3 vergrößert dargestellten Stützscheibe 17 erläutert wird. Die Einrichtung zum automatischen Unwuchtausgleich besteht aus einer in innerhalb der Stützscheibe 17 angeordneten Umlaufbahn 18 mit mehreren darin frei beweglichen Ausgleichsmassen 19. Bei der gezeigten Ausführung sind die Ausgleichsmassen 19 als Rotationskörper in Form von Kugeln ausgeführt. Die zur Mittelachse 20 der Stützscheibe 17 konzentrische Umlaufbahn 18 ist am inneren Ende einer von der einen Seite der Stützscheibe 17 eingearbeiteten Ringnut 21 angeordnet. Die Breite B der Umlaufbahn 18 ist derart gewählt, daß sich die Ausgleichsmassen 19 auch radial bewegen können. Die Breite B der Umlaufbahn 18 ist somit um einen vorgegeben Betrag größer als der Durchmesser der Kugeln. An ihrer radial äußeren Innenwand ist die Umlaufbahn 18 entsprechend dem Radius der Kugeln abgerundet. In die Ringnut 21 ist ein z.B. aus Gummi o.ä. bestehender Sicherungsring 22 eingesetzt, der ein Herausfallen der Kugeln verhindert.

Anhand von Figur 4 wird im folgenden das Prinzip des automatischen Unwuchtausgleichs erläutert. Bei vorhandener Unwucht wirkt bei einer Drehung des Spannerelements (hier: Stützscheibe 17) auf die innerhalb der Umlaufbahn frei beweglichen Kugeln eine Zentrifugalkraft Fz ausgehend vom Massenmittelpunkt (Schwerpunkt) 23. Das Spannerelement kann jedoch nur die radialen Komponenten Fz,r (ausgehend von Drehpunkt 24) aufnehmen, so daß auf die Kugeln die Komponente in Umfangsrichtung Fz,U wirkt. Infolge Fz,U bewegt sich jede Kugel solange, bis der Massenmittelpunkt 23 mit dem Drehpunkt 24 zusammenfällt (d.h. Fz,U = 0). Die Kugeln ordnen sich also automatisch als Gegengewicht zur Unwucht an.

Die Erfindung ist nicht auf das vorstehend beschriebene HSK-Spannsystem beschränkt. Sie ist in entsprechender Weise auch für SK-Spannsysteme oder andere Werkzeugspanner einsetzbar.

## Patentansprüche

1. Werkzeugspanner zum Spannen eines Werkzeugs (1) oder Werkzeughalters in einer Arbeitsspindel (2) einer Werkzeugmaschine mit mehreren zur Drehachse (8) der Arbeitsspindel (2) koaxialen und bei deren Drehung mitrotierenden Spannerelementen (15, 16, 17), wobei in mindestens einem der Spannerelemente (15, 16, 17) eine Einrichtung zum Unwuchtausgleich (18, 19) integriert ist, **dadurch gekennzeichnet, dass** die Einrichtung zum Unwuchtausgleich (18, 19) eine in dem Spannerelement (15, 16, 17) zu dessen Mittelachse (20) koaxial angeordnete Umlaufbahn (18) mit mehreren darin in Umtangsrichtung frei beweglichen Ausgleichsmassen (19) umfaßt.

2. Werkzeugspanner nach Anspruch 1, **dadurch gekennzeichnet, dass** die Ausgleichsmassen (19) als Rotationskörper, insbesondere Kugeln, ausgebildet sind.

3. Werkzeugspanner nach Anspruch 1 oder 2, **dadurch gekennzeichnet, dass** die Ausgleichsmassen (19) auch radial beweglich innerhalb der Umlaufbahn (18) angeordnet sind.

4. Werkzeugspanner nach einem der Ansprüche 1 bis 3, **dadurch gekennzeichnet, dass** die Breite (B) der Umlaufbahn (18) größer als der Durchmesser der als Rotationskörper ausgeführten Ausgleichsmassen (19) ist.

5. Werkzeugspanner nach einem der Ansprüche 1 bis 4, **dadurch gekennzeichnet, dass** die Umlaufbahn (18) an ihrer radial äußeren Innenwand abgerundet ist.

6. Werkzeugspanner nach einem der Ansprüche 1 bis 5, **dadurch gekennzeichnet, dass** die Umlaufbahn (18) an dem inneren Ende einer von der einen Seite des Spannerelements (15, 16, 17) eingearbeiteten Ringnut (21) angeordnet ist.

7. Werkzeugspanner nach einem der Ansprüche 1 bis 6, **dadurch gekennzeichnet, dass** die Rotationskörper (19) durch einen in das Spannerelement (15, 16, 17) einsetzbaren Sicherungsring (22) gegen Herausfallen gesichert sind.

8. Werkzeugspanner nach einem der Ansprüche 1 bis 7, **dadurch gekennzeichnet, dass** in der Umlaufbahn (18) eine Flüssigkeit angeordnet ist.

9. Werkzeugspanner nach Anspruch 8, **dadurch gekennzeichnet, dass** die Viskosität der Flüssigkeit von außen veränderbar ist.

10. Werkzeugspanner nach einem der Ansprüche 1 bis 9, **dadurch gekennzeichnet, dass** in mehreren Spannerelementen (15, 16, 17) jeweils eine Einrichtung zum automatischen Unwuchtausgleich (18, 19) integriert ist.

## Claims

1. Tool clamping device for clamping a tool (1) or tool holder in a work spindle (2) of a machine tool with a plurality of clamping elements (15, 16, 17) coaxial with the axis of rotation (8) of the work spindle (2) and rotating with it as it turns, wherein a device for offsetting imbalance (18, 19) is incorporated in at least one of the clamping elements (15, 16, 17), **characterised in that** the device for offsetting imbalance (18, 19) comprises a circulating channel (18) which is arranged in the clamping element (15, 16, 17) coaxial with its centre axis (20) with a plurality of offsetting masses (19) movable freely in the circumferential direction in it.

2. Tool clamping device according to claim 1, **characterised in that** the offsetting masses (19) are embodied as rotational bodies, in particular balls.

3. Tool clamping device according to claim 1 or 2, **characterised in that** the offsetting masses (19) are also arranged so as to be able to move radially inside the circulating channel (18).

4. Tool clamping device according to one of claims 1 to 3, **characterised in that** the breadth (B) of the circulating channel (18) is greater than the diameter of the offsetting masses (19) embodied as rotational bodies.

5. Tool clamping device according to one of claims 1 to 4, **characterised in that** the circulating channel (18) is rounded on its radially outer inner wall.

6. Tool clamping device according to one of claims 1 to 5, **characterised in that** the circulating channel (18) is arranged at the inner end of an annular groove (21) formed on one side of the clamping element (15, 16, 17).

7. Tool clamping device according to one of claims 1 to 6, **characterised in that** the rotational bodies (19) are secured against falling out by a securing ring (22) which can be inserted in the clamping element (15, 16, 17).

8. Tool clamping device according to one of claims 1 to 7, **characterised in that** a liquid is arranged in the circulating channel (18).

9. Tool clamping device according to claim 8, **characterised in that** the viscosity of the liquid can be changed from outside.

10. Tool clamping device according to one of claims 1 to 9, **characterised in that** in each case a device for automatically offsetting imbalance (18, 19) is incorporated in a plurality of clamping elements (15, 16, 17).

## Revendications

1. Dispositif de serrage d'outil, pour le serrage d'un outil (1) ou d'un porte-outil dans une broche de travail (2) d'une machine-outil, avec plusieurs éléments de serrage (15, 16, 17) coaxiaux à l'axe de rotation (8) de la broche de travail (2) et conjointement rotatifs lors de la rotation de celle-ci, sachant qu'un moyen de compensation de balourd (18, 19) est intégré dans au moins un des éléments de serrage (15, 16, 17), **caractérisé en ce que** le moyen de compensation de balourd (18, 19) comprend une voie de circulation (18) disposée dans l'élément de serrage (15, 16, 17) coaxialement à l'axe médian (20) de ce dernier, avec plusieurs masses d'équilibrage (19) librement mobiles en direction circonférentielle dans cette voie.

2. Dispositif de serrage d'outil selon la revendication 1, **caractérisé en ce que** les masses d'équilibrage (19) sont réalisées sous la forme de corps de révolution, en particulier de billes.

3. Dispositif de serrage d'outil selon la revendication 1 ou 2, **caractérisé en ce que** les masses d'équilibrage (19) sont disposées également à mobilité radiale à l'intérieur de la voie de circulation (18).

4. Dispositif de serrage d'outil selon l'une des revendications 1 à 3, **caractérisé en ce que** la largeur (B) de la voie de circulation (18) est supérieure au diamètre des masses d'équilibrage (19) réalisées sous la forme de corps de révolution.

5. Dispositif de serrage d'outil selon l'une des revendications 1 à 4, **caractérisé en ce que** la voie de circulation (18) est arrondie sur sa paroi intérieure radialement extérieure.

6. Dispositif de serrage d'outil selon l'une des revendications 1 à 5, **caractérisé en ce que** la voie de circulation (18) est disposée à l'extrémité intérieure d'une rainure annulaire (21) ménagée depuis un côté de l'élément de serrage (15, 16, 17).

7. Dispositif de serrage d'outil selon l'une des revendications 1 à 6, **caractérisé en ce que** les corps de révolution (19) sont empêchés de tomber par un jonc d'arrêt (22) pouvant être inséré dans l'élément de serrage (15, 16, 17).

8. Dispositif de serrage d'outil selon l'une des revendications 1 à 7, **caractérisé en ce qu'**un liquide est disposé dans la voie de circulation (18).

9. Dispositif de serrage d'outil selon la revendication 8, **caractérisé en ce que** la viscosité du liquide peut être modifiée de l'extérieur.

10. Dispositif de serrage d'outil selon l'une des revendications 1 à 9, **caractérisé en ce qu'**un moyen respectif de compensation automatique de balourd (18, 19) est intégré dans plusieurs éléments de serrage (15, 16, 17).
